# EUROPÄISCHE PATENTSCHRIFT

(11) **EP 2 266 485 B1**
(45) Veröffentlichungstag und Bekanntmachung des Hinweises auf die Patenterteilung: **08.08.2018**
(21) Anmeldenummer: 09008354.4
(22) Anmeldetag: 26.06.2009
(51) Int. Cl.: A61C 1/00, A61C 19/04

(54) **Vorrichtung und Verfahren zur Anzeige der Betriebsparameter einer medizinischen, insbesondere dentalen, Behandlungsvorrichtung**
Device and method for displaying the operating parameters of a medical, in particular dental treatment device
Dispositif et procédé d'affichage de paramêtres d'operation d'un dispositif médical, en particulier de traitement dentaire

(43) Veröffentlichungstag der Anmeldung: 29.12.2010
(73) Patentinhaber: W & H Dentalwerk Bürmoos GmbH, 5111 Bürmoos (AT)
(72) Erfinder: Helfenbein, Gerald, 5133 Gilgenberg (AT); Schröck, Rainer, 5111 Bürmoos (AT)

(56) Entgegenhaltungen:
- EP-A- 1 839 619
- EP-A- 1 839 620
- EP-A- 1 917 930
- DE-A1- 10 219 648
- US-A- 5 049 069
- US-A- 5 295 833

## Beschreibung

Die vorliegende Erfindung bezieht sich auf eine Vorrichtung und Verfahren zur Anzeige der Betriebsparameter einer medizinischen, insbesondere dentalen, Behandlungsvorrichtung zur Aufbereitung eines Wurzelkanals nach den Oberbegriffen der Ansprüche 1 und 13.

Derartige Vorrichtungen zur Aufbereitung eines Wurzelkanals weisen zumindest eine Basisstation sowie ein damit kabelgebunden oder kabellos verbundenes Handstück auf. Das Handstück ist neben einer Werkzeugaufnahme für ein Behandlungswerkzeug mit einem Motor zum rotierenden, oszillierenden, oder vibrierenden Antrieb eines Werkzeugs ausgestattet. Vorzugsweise kann des Weiteren eine Messschaltung zur Messung der Wurzelkanallänge und/ oder der an dem Werkzeug anliegenden Last im Handstück oder in der Basisstation angeordnet sein. Bei Messung der Wurzelkanallänge wird das in einer Werkzeugaufnahme aufgenommene Behandlungswerkzeug vorzugsweise als erste Elektrode genutzt und steht mittels einer zweiten Elektrode, insbesondere einer Mundelektrode, mit der Wurzelkanallängenmessschaltung über ein im Kopf, oder über ein extern am Handstück angeordnetes Kontaktstück in elektrisch leitender Verbindung. Zur Aufbereitung eines Wurzelkanals wird auf Grund der zu behandelnden Wurzelkanalanatomie eine Vielzahl unterschiedlicher Werkzeuge, insbesondere Feilen, mit unterschiedlichen Durchmessern und Werkzeugeigenschaften, wie z.B. der Bruchfestigkeit, verwendet. Die Werkzeuge unterscheiden sich wesentlich hinsichtlich ihrer einzustellenden Betriebsparameter, wie zum Beispiel der maximal zulässigen Drehzahl oder Drehmoment.

Eine derartige medizinische, insbesondere dentale, Vorrichtung zur Aufbereitung eines Wurzelkanals ist aus der erteilten US Schrift US 6,929,476, bzw. aus der zugehörigen deutschen Anneldung DE 10219648 A1, bekannt.

Die aus dem Stand der Technik bekannte Vorrichtung zur Aufbereitung eines Wurzelkanals mit zumindest einem, insbesondere schnurlosen, Handstück und einem Ladegerät weist zur Einstellung der maximal zulässigen Betriebsparameter, insbesondere der maximal zulässigen Drehzahl und Drehmoment, oder Position des Werkzeugs im Wurzelkanal, sowie möglicher Autofunktionsparameter, wie z.B. Autostopp oder Autoreverse, bei denen das Werkzeug selbstständig in Gegenrichtung dreht, oder stoppt, wenn das Werkzeug eine bestimmte Position im Wurzelkanal, oder eine bestimmte Last am Werkzeug erreicht hat, mehrere Stellmittel auf. Die Stellmittel sind sowohl am Handstück als auch an dem Ladegerät angeordnet. Der Anwender kann so sein Handstück auf die Parameter des eingesetzten Werkzeugs abstimmen.

Des Weiteren befinden sich am Handstück selbst und an dem Ladegerät Anzeigemittel zum gleichzeitigen Informieren des Anwenders über die mehreren erfassten Betriebsparameter, insbesondere der erfassten und eingestellten Werte, wie zum Beispiel der Drehzahl, Drehmoment, und Position des Werkzeugs im Wurzelkanal, sowie der Autofunktionsparameter.

Als nachteilig dieser Ausgestaltung erweisen sich die mehreren Einstellmittel sowie Anzeigemittel am Handstück und an dem Ladegerät zur gleichzeitigen Bedienung der Vorrichtung und Informieren des Anwenders über die zahlreichen Betriebsparameter des Werkzeugs und Handstücks.

Durch die gleichzeitige Anzeige der zahlreichen Betriebsparameter wird der Anwender während der Behandlung über eine Vielzahl von Handstück- und/ oder Werkzeugparameter informiert. Je nach Behandlungssituation sind jedoch für den Anwender nicht alle Betriebsparameter von Interesse. Bei Annäherung des Werkzeugs an die maximal zulässige Position im Wurzelkanal tritt zum Beispiel die Anzeige einer Annäherung an eine maximal zulässige Drehzahl in den Hintergrund. Bei gleichzeitiger Anzeige jedoch wird der Anwender stets über alle Betriebsparameter informiert. Dies führt zu einer für den Anwender schwierigen Wahrnehmung der einzelnen Parameter, insbesondere der für die jeweilige Behandlung besonders relevanten Parameter.

Um die Anzeige der Betriebsparameter im Blickfeld des Anwenders anzuordnen, wird die Anzeigevorrichtung vorzugsweise am Handstück angebracht. Die Handstücke werden jedoch möglichst klein ausgestaltet, um für den Anwender eine leichte Handhabung im Mund des Patienten zu gewährleisten. Somit ist der Platzbedarf für eine Anzeigevorrichtung zur gleichzeitigen Anzeige der mehreren Parameter am Handstück nicht ausreichend. Folglich wird im Stand der Technik eine weitere Anzeige, insbesondere an dem Ladegerät, angebracht. Diese Anzeige befindet sich jedoch ausserhalb des Blickfelds des Anwenders.

Des Weiteren birgt die im Stand der Technik bekannte Vorrichtung zur Wurzelkanalaufbereitung die Gefahr von möglichen Fehlinterpretationen. Durch die gleichzeitige Anzeige der zahlreichen Betriebsparameter besteht die Gefahr, dass der Anwender die angezeigten Werte verwechselt. Dies kann folglich zu Komplikationen bei der Behandlung, insbesondere bei der Aufbereitung des Wurzelkanals, führen.

Auf Grund der großen Anzahl an einstellbaren Werkzeug- und Handstückparameter sind an dem Handstück und/ oder Basisstation eine Vielzahl an Einstellmittel notwendig. Diese Betätigung der zahlreichen Einstellmittel ist für den Anwender mit einer komplexen und zeitraubenden Bedienung verbunden. Des Weiteren kann es hierbei ebenfalls zu möglichen Verwechslungen bei der Bedienung und Einstellung der Betriebsparameter des Werkzeugs oder Handstücks kommen.

Eine weitere medizinische, insbesondere dentale, Vorrichtung mit einer Anzeige für den Antrieb eines Dentalhandstückes ist aus der EP 1917930 A1 bekannt.

Das bekannte Handstück weist eine Steuervorrichtung auf, welche bei Überschreiten eines Grenzwertes eines Betriebsparameters, insbesondere eines Drehmomentwertes, mittels eines Anzeigemittels optische oder akustische Signale erzeugt. Die Steuervorrichtung ist ausgebildet einen Betriebsparameter zu erfassen und diesen bei Erreichen eines Grenzwertes, insbesondere mittels der Instrumentenbeleuchtung oder durch eine Funktion des vom Dentalhandstück abgegebenen Spraywassers, anzuzeigen.

Der vorliegenden Erfindung liegt daher die Aufgabe zugrunde eine Vorrichtung und ein Verfahren zur Anzeige und Einstellung der Betriebsparameter einer medizinischen, insbesondere dentalen, Behandlungsvorrichtung zur Aufbereitung eines Wurzelkanals zu schaffen, die es ermöglicht, die Nachteile des Stand der Technik zu vermeiden und dem Anwender eine verbesserte Anzeige und Einstellung der Parameter der Behandlungsvorrichtung gewährleistet.

Gemäß einem Ausführungsbeispiel einer medizinischen, insbesondere dentalen, Behandlungsvorrichtung zur Aufbereitung eines Wurzelkanals weist diese ein Handstück, eine Antriebseinheit zum Antrieb eines endodontischen Werkzeugs, eine Vorrichtung zur Erfassung zumindest zweier Messwerte zweier Betriebsparameter des Handstücks und/ oder des Werkzeugs, vorzugsweise der auf das Werkzeug wirkenden Last, und/ oder der Drehzahl des endodontischen Werkzeugs und/ oder der Position des endodontischen Werkzeugs in einem Wurzelkanal, eine Steuervorrichtung mit zumindest zweier Referenzwerte für die von der Erfassungsvorrichtung erfassten Betriebsparameter und eine Anzeigevorrichtung zur visuellen, akustischen oder haptischen Anzeige eines Betriebsparameters auf. Die Steuervorrichtung ist mit der Anzeigevorrichtung und der Erfassungsvorrichtung verbunden und ausgebildet die von der Erfassungsvorrichtung erfassten Messwerte der Betriebsparameter mit den Referenzwerten zu vergleichen und wahlweise jenen Betriebsparameter an der Anzeigevorrichtung anzuzeigen, dessen Messwert den entsprechenden Referenzwert der Steuervorrichtung erreicht, so dass erst bei Erreichen eines Referenzwertes der jeweilige Betriebsparameter an der Anzeigevorrichtung wiedergeben wird.

Die vorliegende medizinische, insbesondere dentale, Behandlungsvorrichtung zur Aufbereitung eines Wurzelkanals weist eine Basisstation, insbesondere ein Ladegerät, sowie ein dazugehöriges kabelloses oder kabelgebundenes Handstück auf. Eine Anzeigevorrichtung dient zum Informieren des Anwenders über die erfassten Betriebsparameter, welche durch eine Anzeige am Handstück, an der Basisstation oder durch ein eigenes, insbesondere drittes Bauteil, ausgebildet ist. Die Anzeige selbst ist vorzugsweise als visuelle Anzeige mit mehreren Leuchtdioden, einem Display, vorzugsweise einem LCD oder OLED Display, einer Instrumentenbeleuchtung, einem beleuchteten Fingertaster oder Druckdeckel, oder einem Projektor ausgestaltet. Des Weiteren kann die Anzeige durch eine akustische Anzeige mit einem Lautsprecher oder Summer, oder durch eine haptische Anzeige mit einem Schwingungserzeuger oder Temperaturerzeuger die auf die Handgriffhülse des Handstücks einwirken, gebildet sein. Bei einer visuellen Anzeige erfolgt die Darstellung der Information numerisch, graphisch, mittels Farbwechsel, Blinken oder Änderung der Farbintensität. Eine akustische Übermittlung der Information wird vorzugsweise mittels eines Pieptons, einer Tonsequenz, insbesondere einer Melodie, oder einer Sprachausgabe durchgeführt. Die haptische Anzeige erfolgt vorzugweise mittels des Erzeugens von Schwingungen oder unterschiedlicher Temperaturen.

Zur Einstellung möglicher Referenzwerte für die Steuervorrichtung oder maximal zulässiger Betriebsparameter des Handstücks oder Werkzeugs, insbesondere der Last am Werkzeug, einer Drehzahl des endodontischen Werkzeugs, oder Position des Werkzeugs in einem Wurzelkanal, befindet sich am Handstück oder an der Basisstation zumindest eine Stellvorrichtung. Des Weiteren ist es möglich die Stellvorrichtung durch ein externes Bauteil auszugestalten, vorzugsweise durch einen Fußanlasser.

Um die Betriebsparameter der Behandlungsvorrichtung erst dann an der Anzeigevorrichtung wiederzugeben, wenn ein Messwert eines erfassten Betriebsparameters einen in einer Steuervorrichtung hinterlegten Referenzwert erreicht hat, ist die Steuervorrichtung mit der Anzeigevorrichtung und der Erfassungsvorrichtung verbunden. Somit wird bei Erreichen einer Referenzlast oder einer Referenzdrehzahl wahlweise die Last am Werkzeug oder die Drehzahl des Werkzeugs, sowie bei geschlossenem Messkreis der Positionserfassungsvorrichtung oder Erfassung einer Position des Werkzeugs im Wurzelkanal die Position des Werkzeugs im Wurzelkanal anzeigt. Es können jeweils die erfassten Messwerte, insbesondere in Echtzeit, und/ oder die maximal zulässigen Betriebsparameter angezeigt werden. Bei Inbetriebnahme des Handstücks, Unterschreiten einer Referenzlast, Überschreiten einer Referenzdrehzahl, oder bei offenem Messkreis der Positionserfassungsmittel werden vorzugsweise werkzeugspezifische Daten, insbesondere Werkzeugname und Werkzeugparameter, und/ oder handstückspezifische Daten, wie zum Beispiel der Akkufüllstand, oder insbesondere die Autofunktionsparameter wie z.B. Autoreverse, Autostopp, oder Autoforward bei denen das Werkzeug selbstständig in Gegenrichtung dreht, stoppt, oder automatisch vorwärts läuft, wenn ein maximal zulässiger Betriebsparameter, wie Last, Drehzahl, oder Position im Wurzelkanal erreicht wird, angezeigt. Bei Ausserbetriebnahme des Handstücks hingegen steht dem Anwender vorzugsweise eine Datenmenge mit mehreren Datensätzen mit jeweils zumindest einem dem Werkzeug oder Handstück zugeordneten Parameter, insbesondere ein Referenzwert für die Steuervorrichtung und/ oder ein maximal zulässiger Betriebsparameter, zur Verfügung aus der er das verwendete Werkzeug auswählen kann.

Die zumindest eine an dem Handstück, an der Basisstation oder extern angeordnete Stellvorrichtung ist mit der Anzeigevorrichtung verbunden. Abhängig vom angezeigten Betriebsparameter können somit Werte des jeweilig angezeigten Parameters mittels der zumindest einen Stellvorrichtung, welche vorzugsweise als Taster am Handstück, an der Basisstation oder durch einen externen Fußanlasser ausgebildet ist, eingestellt werden.

Die vorliegende medizinische, insbesondere dentale, Behandlungsvorrichtung zur Aufbereitung eines Wurzelkanals, zeichnet sich durch eine Reihe erheblicher Vorteile aus.

Die Anzeige eines Betriebsparameters erst bei Erreichen eines Referenzwertes, schließt die Gefahr einer möglichen Fehlinterpretation zwischen den mehreren Betriebsparametern seitens des Anwenders aus. Des Weiteren werden dem Anwender abhängig von der jeweiligen Behandlungssituation nur die für ihn relevanten Werte angezeigt. Bei Annäherung des Werkzeugs an eine Referenzposition in einem Wurzelkanal wird an der Anzeigevorrichtung lediglich die Position des Werkzeugs im Wurzelkanal wiedergegeben. Die weiteren Betriebspärameter werden erst bei Erreichen deren Referenzwerte angezeigt. Somit werden dem Anwender mittels der vorliegenden Anzeigevorrichtung und Steuervorrichtung nur die für ihn relevanten Informationen abhängig vom Erreichen eines in einer Steuervorrichtung hinterlegten Referenzwertes angezeigt.

Einen weiteren Vorteil der Erfindung bildet der geringe Platzbedarf für die Anzeigevorrichtung. Durch die Anzeige jeweils nur eines Betriebsparameters an der Anzeigevorrichtung kann diese, im Vergleich zu einer ständigen und gleichzeitigen Anzeige aller Betriebsparameter mit mehreren Anzeigeelementen für jeden einzelnen Parameter, auf ein Minimum reduziert werden. Die Anzeige aller Betriebsparameter kann somit am Handstück und im Blickfeld des Anwenders erfolgen.

Des Weiteren wird dem Anwender mittels der vorliegenden Stellvorrichtung das Einstellen des jeweils angezeigten Betriebsparameters ermöglicht. Dies gewährleistet dem Anwender eine einfache und zeitsparende Bedienung des Handstücks.

Im Rahmen der Erfindung versteht es sich selbstverständlich, dass die vorliegende Behandlungsvorrichtung nicht auf eine Vorrichtung zur Aufbereitung von Wurzelkanälen beschränkt ist, vielmehr können mittels der vorliegenden Vorrichtung eine Vielzahl von medizinischen Behandlungen durchgeführt werden. Des Weiteren ist es möglich, dass bei gleichzeitigem Erreichen mehrerer Referenzwerte, die Anzeige der Werkzeug- und Handstückparameter gleichzeitig, abwechselnd, oder nach einer, insbesondere seitens des Anwenders wählbaren, Priorität erfolgen kann.

Nachfolgend wird die Erfindung anhand mehrerer Ausführungsbeispiele und in Verbindung mit den beigefügten Zeichnungen erläutert.

Dabei zeigt:
Figur 1 ein Ausführungsbeispiel einer medizinischen, insbesondere dentalen, Behandlungsvorrichtung zur Aufbereitung eines Wurzelkanals,
Figur 2 ein Ausführungsbeispiel eines kabellosen Handstücks der Behandlungsvorrichtung,
Figur 3 ein Ausführungsbeispiel einer Basisstation zur Aufnahme eines schnurlosen Handstücks, insbesondere zur Versorgung des Handstücks mit elektrischer Energie.

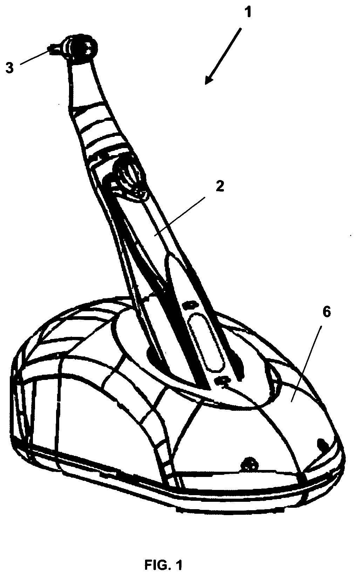

In Figur 1 ist eine medizinische, insbesondere dentale, Behandlungsvorrichtung 1 zur Aufbereitung eines Wurzelkanals dargestellt. Diese Vorrichtung weist neben einem Handstück 2 eine Basisstation 6 auf. Das Handstück 2 ist mit einer Werkzeugaufnahme für ein Behandlungswerkzeug 3 sowie mit einem Motor zum Antrieb des Werkzeugs 3 ausgestattet.

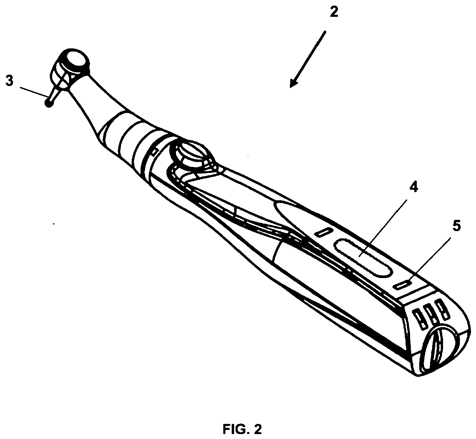

In Figur 2 ist das schnurlose Handstück 2 der Behandlungsvorrichtung 1 abgebildet. Neben einer Anzeigevorrichtung 4 zur Anzeige der Betriebsparameter des Handstücks und/ oder Werkzeugs befindet sich des Weiteren zumindest eine Stellvorrichtung 5 zum Einstellen möglicher Referenzwerte und/ oder maximal zulässiger Betriebsparameter für den Betrieb des Handstücks 2 oder Werkzeugs 3 am Handstück 2. Die Anzeigevorrichtung 4 ist vorzugsweise als visuelle Anzeige mit mehreren Leuchtdioden, oder einem Display, vorzugsweise einem LCD Display, ausgestaltet. Die zumindest eine Stellvorrichtung 5 ist insbesondere als Taster am Handstück 2 ausgebildet.

Um die Betriebsparameter der Behandlungsvorrichtung 1 erst dann an der Anzeigevorrichtung 4 wiederzugeben, wenn ein Messwert eines erfassten Betriebsparameters einen in einer Steuervorrichtung hinterlegten Referenzwert erreicht hat, ist das Handstück 1 mit einer Vorrichtung zur Erfassung zumindest zweier Messwerte zweier Betriebsparameter des Handstücks 2 und/ oder des Werkzeugs 3, vorzugsweise der auf das Werkzeug 3 wirkenden Last, und/ oder der Drehzahl des endodontischen Werkzeugs 3 und / oder der Position des endodontischen Werkzeugs 3 in einem Wurzelkanal, sowie mit einer Steuervorrichtung mit zumindest zwei Referenzwerte für die von der Erfassungsvorrichtung erfassten Betriebsparameter, ausgestattet. Die Steuervorrichtung ist wiederum mit der Anzeigevorrichtung 4 und der Erfassungsvorrichtung verbunden und vergleicht die von der Erfassungsvorrichtung erfassten Messwerte mit den hinterlegten Referenzwerten und zeigt wahlweise jenen Betriebsparameter an der Anzeigevorrichtung 4 an, dessen Messwert den entsprechenden Referenzwert der Steuervorrichtung erreicht hat, so dass erst bei Erreichen eines Referenzwertes der jeweilige Betriebsparameter an der Anzeigevorrichtung 4 wiedergeben wird. Der Betriebsparameter wird solange an der Anzeigevorrichtung 4 angezeigt, solange der Messwert den Referenzwert des jeweiligen Betriebsparameters überschreitet oder unterschreitet.

Die vorzugsweise zumindest eine an dem Handstück 2 oder an der Basisstation 1 angeordnete Stellvorrichtung 5 ist mit der Anzeigevorrichtung verbunden. Abhängig von einem angezeigten Betriebsparameter, insbesondere einem erfassten und/ oder maximal zulässigen Wert, und/ oder einem werkzeugspezifischen Wert, insbesondere einem Werkzeugname und Werkzeugparameter, und/ oder einem handstückspezifischen Wert, insbesondere dem Akkufüllstand oder der Autofunktionsparameter wie z.B. Autoreverse, Autostopp, oder Autoforward bei denen das Werkzeug 3 selbstständig in Gegenrichtung dreht, stoppt, oder automatisch vorwärts läuft, wenn eine maximal zulässige Last, Drehzahl, oder Position in einem Wurzelkanal erreicht wird, können somit Werte des jeweilig angezeigten Betriebsparameters mittels der zumindest einen Stellvorrichtung eingestellt werden.

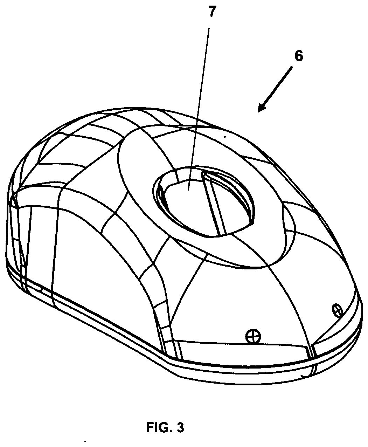

In Figur 3 ist die Basisstation 6 der Behandlungsvorrichtung 1 dargestellt. Die Basisstation 6 dient zur Versorgung des Handstücks 3 mit elektrischer Energie. Hierzu weist die Basisstation eine Aufnahme 7 für das Handstück 2 auf.

Die Erfindung ist nicht auf das beschriebene Ausführungsbeispiel beschränkt. Im Rahmen der Erfindung versteht es sich selbstverständlich, dass die Anzeigevorrichtung, die Erfassungsvorrichtung, die Steuervorrichtung, sowie die zumindest eine Stellvorrichtung im Handstück oder in der Basisstation angeordnet sein können.

## Patentansprüche

1. Medizinische, insbesondere dentale, Behandlungsvorrichtung (1) zur Aufbereitung eines Wurzelkanals mit einem Handstück (2), einer Antriebseinheit zum Antrieb eines endodontischen Werkzeugs (3), einer Vorrichtung zur Erfassung zumindest zweier Messwerte zweier Betriebsparameter des Handstücks (2) und/ oder des Werkzeugs (3), vorzugsweise der auf das Werkzeug (3) wirkenden Last, und/ oder der Drehzahl des endodontischen Werkzeugs und / oder der Position des endodontischen Werkzeugs in einem Wurzelkanal, einer Steuervorrichtung mit zumindest zwei Referenzwerten für die von der Erfassungsvorrichtung erfassten Betriebsparameter, einer Anzeigevorrichtung (4) zur visuellen, akustischen oder haptischen Anzeige eines Betriebsparameters, **dadurch gekennzeichnet, dass** die Steuervorrichtung mit der Anzeigevorrichtung (4) und der Erfassungsvorrichtung verbunden ist, wobei die Steuervorrichtung ausgebildet ist, die von der Erfassungsvorrichtung erfassten Messwerte der Betriebsparameter mit den Referenzwerten zu vergleichen und wahlweise jenen Betriebsparameter an der Anzeigevorrichtung (4) anzuzeigen, dessen Messwert den entsprechenden Referenzwert der Steuervorrichtung erreicht, so dass erst bei Erreichen eines Referenzwertes der jeweilige Betriebsparameter an der Anzeigevorrichtung (4) wiedergeben wird.

2. Medizinische, insbesondere dentale, Behandlungsvorrichtung (1) nach Anspruch 1, **dadurch gekennzeichnet, dass** die Steuervorrichtung ausgebildet ist, den zumindest einen an der Anzeigevorrichtung (4) angezeigten Betriebsparameter solange anzuzeigen, solange der Messwert den Referenzwert des jeweiligen Betriebsparameters überschreitet oder unterschreitet.

3. Medizinische, insbesondere dentale, Behandlungsvorrichtung (1) zur Aufbereitung eines Wurzelkanals nach einem der vorherigen Ansprüche, **dadurch gekennzeichnet, dass** die Vorrichtung (1) zumindest eine Stellvorrichtung (5) zur Auswahl zumindest eines Referenzwertes für die von der Erfassungsvorrichtung erfassten Betriebsparameter aufweist.

4. Medizinische, insbesondere dentale, Behandlungsvorrichtung (1) zur Aufbereitung eines Wurzelkanals nach einem der vorherigen Ansprüche, **dadurch gekennzeichnet, dass** der an der Anzeigevorrichtung (4) angezeigte Wert eines Betriebsparameters mittels der zumindest einen Stellvorrichtung (5) einstellbar ist.

5. Medizinische, insbesondere dentale, Behandlungsvorrichtung (1) zur Aufbereitung eines Wurzelkanals nach einem der vorherigen Ansprüche, **dadurch gekennzeichnet, dass** zumindest einer der erfassten Werte durch das Feststellen eines Messkreises der Positionserfassungsvorrichtung oder Inbetriebnahme oder Ausserbetriebnahme des Handstücks (2) gebildet ist.

6. Medizinische, insbesondere dentale, Behandlungsvorrichtung (1) zur Aufbereitung eines Wurzelkanals nach einem der vorherigen Ansprüche, **dadurch gekennzeichnet, dass** der zumindest eine an der Anzeigevorrichtung (4) angezeigte Betriebsparameter einen erfassten und/ oder einen maximal zulässigen Wert des jeweiligen Betriebsparameters, und/ oder werkzeugspezifische Daten, insbesondere Werkzeugname und Werkzeugparameter, und/ oder handstückspezifische Daten, insbesondere den Akkufüllstand oder die Autofunktionsparameter wie z.B. Autoreverse, Autostopp, oder Autoforward bei denen das Werkzeug (3) selbstständig in Gegenrichtung dreht, stoppt, oder automatisch vorwärts läuft, wenn eine maximal zulässige Last, Drehzahl, oder Position in einem Wurzelkanal erreicht wird, umfasst.

7. Medizinische, insbesondere dentale, Behandlungsvorrichtung (1) zur Aufbereitung eines Wurzelkanals nach einem der vorherigen Ansprüche, **dadurch gekennzeichnet, dass** die Anzeigevorrichtung (4) eine visuelle Anzeige umfasst, die mehrere Leuchtdioden, ein Display, eine Instrumentenbeleuchtung, einen beleuchteten Fingertaster oder Druckdeckel, oder einen Projektor aufweist.

8. Medizinische, insbesondere dentale, Behandlungsvorrichtung (1) zur Aufbereitung eines Wurzelkanals nach einem der vorherigen Ansprüche, **dadurch gekennzeichnet, dass** die Anzeigevorrichtung (4) durch eine akustische Anzeige mit einem Lautsprecher oder einem Summer gebildet ist.

9. Medizinische, insbesondere dentale, Behandlungsvorrichtung (1) zur Aufbereitung eines Wurzelkanals nach einem der vorherigen Ansprüche, **dadurch gekennzeichnet, dass** die Anzeigevorrichtung (4) eine haptische Anzeige mit einem Schwingungserzeuger oder einem Temperaturerzeuger im Handstück umfasst.

10. Medizinische, insbesondere dentale, Behandlungsvorrichtung (1) zur Aufbereitung eines Wurzelkanals nach einem der Ansprüche 4 bis 10, **dadurch gekennzeichnet, dass** die zumindest eine Stellvorrichtung (5) durch einen Taster, vorzugsweise am Handstück (2) oder an der Basisstation (6), oder durch eine externe Stellvorrichtung, insbesondere durch einen Fußanlasser, gebildet ist.

11. Medizinische, insbesondere dentale, Behandlungsvorrichtung (1) zur Aufbereitung eines Wurzelkanals nach einem der vorherigen Ansprüche, **dadurch gekennzeichnet, dass** die Behandlungsvorrichtung (1) eine Basisstation (6) und ein kabelgebundenes oder kabelloses Handstück (2) aufweist, wobei die Steuervorrichtung, die Erfassungsvorrichtung und Anzeigevorrichtung (4) im Handstück (2) oder in der Basisstation (6) angeordnet sind.

12. Medizinische, insbesondere dentale, Behandlungsvorrichtung (1) zur Aufbereitung eines Wurzelkanals nach einem der vorherigen Ansprüche, **dadurch gekennzeichnet, dass** die Vorrichtung (1) des Weiteren eine Antriebssteuerung zum Ansteuern der Antriebseinheit auf Basis der an dem Werkzeug (3) anliegenden Last, Drehzahl des Werkzeugs und/ oder Position des Werkzeugs im Wurzelkanal umfasst.

13. Verfahren zur Anzeige der Betriebsparameter einer medizinischen, insbesondere dentalen, Behandlungsvorrichtung (1) nach Anspruch 1, **gekennzeichnet durch** die Schritte:
- Erfassen zumindest zweier Messwerte zweier Betriebsparameter mittels der Erfassungsvorrichtung,
- Vergleichen der erfassten Messwerte mit den jeweiligen Referenzwerten der Betriebsparameter,
- wahlweise Anzeigen des Betriebsparameters an der Anzeigevorrichtung (4), dessen Messwert den entsprechenden Referenzwert der Steuervorrichtung erreicht hat.

14. Verfahren zur Anzeige der Betriebsparameter einer medizinischen, insbesondere dentalen, Behandlungsvorrichtung (1) nach Anspruch 13, **dadurch gekennzeichnet, dass** bei gleichzeitigem Erreichen mehrerer eingestellter Referenzwerte mehrerer Betriebsparameter, die Parameter abwechselnd oder nach einer, insbesondere seitens des Anwender wählbaren, Priorität angezeigt werden.

## Claims

1. A medical, in particular dental, treatment device (1) for processing a root canal with a handpiece (2), a drive unit for driving an endodontic tool (3), a device for detecting at least two measured values of two operating parameters of the handpiece (2) and/or of the tool (3), preferably of the load acting on the tool (3) and/or the rotational speed of the endodontic tool and/or the position of the endodontic tool in a root canal, a control device with at least two reference values for the operating parameters detected by the detection device, a display device (4) for visual, acoustic or haptic display of an operating parameter, **characterized in that** the control device is connected to the display device (4) and to the detection device, wherein the control device is configured to compare the measured values of the operating parameters detected by the detection device with the reference values and to optionally display on the display device (4) this operating parameter whose measured value reaches the corresponding reference value of the control device, so that the respective operating parameter is depicted on the display device (4) only on reaching a reference value.

2. The medical, in particular dental, treatment device (1) according to claim 1, **characterized in that** the control device is configured to display the at least one operating parameter displayed on the display device (4) as long as the measured value exceeds or falls below the reference value of the respective operating parameter.

3. The medical, in particular dental, treatment device (1) for processing a root canal according to any one of the preceding claims, **characterized in that** the device (1) comprises at least one operating device (5) for selecting at least one reference value for the operating parameters detected by the detection device.

4. The medical, in particular dental, treatment device (1) for processing a root canal according to any one of the preceding claims, **characterized in that** the value of an operating parameter displayed on the display device (4) can be adjusted by the at least one operating device (5).

5. The medical, in particular dental, treatment device (1) for processing a root canal according to any one of the preceding claims,**characterized in that** at least one of the detected values is formed by detecting a measurement circuit of the position-detecting device or starting or stopping operation of the handpiece (2).

6. The medical, in particular dental, treatment device (1) for processing a root canal according to any one of the preceding claims, **characterized in that** the at least one operating parameter displayed on the display device (4) comprises a detected value and/or a maximum allowed value of the respective operating parameter and/or tool-specific data, in particular the name of the tool and tool parameters and/or handpiece-specific data, in particular the filling level of the battery or the automatic function parameters, for example, automatic reverse, automatic stop or automatic forward, in which the tool (3) automatically rotates in the opposite direction, stops or automatically runs forward, on reaching a maximum allowed load, rotational speed or position in a root canal.

7. The medical, in particular dental, treatment device (1) for processing a root canal according to any one of the preceding claims, **characterized in that** the display device (4) comprises a visual display, which has a plurality of light-emitting diodes, a display, an instrument light, an illuminated finger push-button or pressure cover or projector.

8. The medical, in particular dental, treatment device (1) for processing a root canal according to any one of the preceding claims, **characterized in that** the display device (4) is formed by an acoustic display with a loudspeaker or a buzzer.

9. The medical, in particular dental, treatment device (1) for processing a root canal according to any one of the preceding claims, **characterized in that** the display device (4) comprises a haptic display with a vibration generator or a temperature generator in the handpiece.

10. The medical, in particular dental, treatment device (1) for processing a root canal according to any one of claims 4 to 10, **characterized in that** the at least one operating device (5) is formed by a push-button, preferably on the handpiece (2) or on the base station (6), or by an external operating device, in particular by a foot pedal.

11. The medical, in particular dental, treatment device (1) for processing a root canal according to any one of the preceding claims, **characterized in that** the treatment device (1) has a base station (6) and a wireless or hardwired handpiece (2), wherein the control device, the detection device and the display device (4) are arranged in the handpiece (2) or in the base station (6).

12. The medical, in particular dental, treatment device (1) for processing a root canal according to any one of the preceding claims, **characterized in that** the device (1) additionally comprises a drive controller for controlling the drive unit on the basis of the load applied to the tool (3), the rotational speed of the tool and/or the position of the tool in the root canal.

13. A method for display of the operating parameters of a medical, in particular dental, treatment device (1) according to claim 1, **characterized by** the steps:
- detecting at least two measured values of two operating parameters by the detection device,
- comparing the detected measured values with the respective reference values of the operating parameters,
- optionally displaying the operating parameter on the display device (4) whose measured value has reached the corresponding reference value of the control device.

14. The method for display of the operating parameters of a medical, in particular dental, treatment device (1) according to claim 13, **characterized in that** on simultaneously reaching multiple set reference values of multiple operating parameters, the parameters are displayed in alternation or according to a priority that can be selected by the user in particular.

## Revendications

1. Dispositif de traitement médical (1), en particulier dentaire pour la préparation d'un canal de racine avec une pièce à main (2), une unité d'entraînement pour l'entraînement d'un instrument endodontique (3), un dispositif pour la détection d'au moins deux valeurs de mesure de deux paramètres de fonctionnement de la pièce à main (2) et/ou de l'instrument (3), de préférence de la charge s'exerçant sur l'instrument (3) et/ou de la vitesse de rotation de l'instrument endodontique et/ou de la position de l'instrument endodontique dans un canal de racine, un dispositif de commande avec au moins deux valeurs de référence pour les paramètres de fonctionnement détectés par le dispositif de détection, un dispositif de signalisation (4) pour la signalisation visuelle, acoustique ou haptique d'un paramètre de fonctionnement, **caractérisé en ce que** le dispositif de commande est relié au dispositif de signalisation (4) et au dispositif de détection, dans lequel le dispositif de commande est réalisé pour comparer les valeurs de mesure des paramètres de fonctionnement détectées par le dispositif de détection avec les valeurs de référence et indiquer au choix au niveau du dispositif de signalisation (4) celui des paramètres de fonctionnement dont la valeur de mesure atteint la valeur de référence correspondante du dispositif de commande de sorte que seulement à l'atteinte d'une valeur de référence, le paramètre de fonctionnement respectif est restitué au niveau du dispositif de signalisation (4).

2. Dispositif de traitement médical (1), en particulier dentaire selon la revendication 1, **caractérisé en ce que** le dispositif de commande est réalisé pour indiquer l'au moins un paramètre de fonctionnement indiqué au niveau du dispositif de signalisation (4) aussi longtemps que la valeur de mesure dépasse par le haut ou par le bas la valeur de référence du paramètre de fonctionnement respectif.

3. Dispositif de traitement médical (1), en particulier dentaire pour la préparation d'un canal de racine selon l'une des revendications précédentes, **caractérisé en ce que** le dispositif (1) présente au moins un dispositif de commande (5) pour la sélection d'au moins une valeur de référence pour les paramètres de fonctionnement détectés par le dispositif de détection.

4. Dispositif de traitement médical (1), en particulier dentaire pour la préparation d'un canal de racine selon l'une des revendications précédentes, **caractérisé en ce que** la valeur d'un paramètre de fonctionnement indiquée au niveau du dispositif de signalisation (4) est réglable au moyen de l'au moins un dispositif de commande (5).

5. Dispositif de traitement médical (1), en particulier dentaire pour la préparation d'un canal de racine selon l'une des revendications précédentes, **caractérisé en ce qu'**au moins l'une des valeurs détectées est formée par le constat d'un circuit de mesure du dispositif de détection de position ou la mise en service ou mise hors service de la pièce à main (2).

6. Dispositif de traitement médical (1), en particulier dentaire pour la préparation d'un canal de racine selon l'une des revendications précédentes, **caractérisé en ce que** l'au moins un paramètre de fonctionnement indiqué au niveau du dispositif de signalisation (4) comprend une valeur détectée et/ou admissible au maximum du paramètre de fonctionnement respectif, et/ou données spécifiques à l'instrument, en particulier le nom de l'instrument et des paramètres d'instrument, et/ou données spécifiques à la pièce à main, en particulier le niveau de charge de l'accumulateur ou les paramètres de fonctionnement automatique, tels par exemple autoreverse, autostop ou autoforward où l'instrument (3) tourne automatiquement en sens inverse, s'arrête ou va automatiquement vers l'avant lorsqu'une charge admissible au maximum, une vitesse de rotation ou position est atteinte dans le canal de racine.

7. Dispositif de traitement médical (1), en particulier dentaire pour la préparation d'un canal de racine selon l'une des revendications précédentes, **caractérisé en ce que** le dispositif de signalisation (4) comprend un affichage visuel qui présente plusieurs diodes électroluminescentes, un afficheur, un éclairage d'instruments, une touche tactile éclairée ou un couvercle de pression, ou un projecteur.

8. Dispositif de traitement médical (1), en particulier dentaire pour la préparation d'un canal de racine selon l'une des revendications précédentes, **caractérisé en ce que** le dispositif de signalisation (4) est formé par une signalisation acoustique avec un haut-parleur ou un buzzer.

9. Dispositif de traitement médical (1), en particulier dentaire pour la préparation d'un canal de racine selon l'une des revendications précédentes, **caractérisé en ce que** le dispositif de signalisation (4) comprend une signalisation haptique avec un générateur de vibrations ou un générateur de température dans la pièce à main.

10. Dispositif de traitement médical (1), en particulier dentaire pour la préparation d'un canal de racine selon l'une des revendications 4 à 10, **caractérisé en ce que** l'au moins un dispositif de commande (5) est formé par un manipulateur, de préférence sur la pièce à main (2) ou sur la station de base (6), ou par un dispositif de commande externe, en particulier par une pédale de commande.

11. Dispositif de traitement médical (1), en particulier dentaire pour la préparation d'un canal de racine selon l'une des revendications précédentes, **caractérisé en ce que** le dispositif de traitement (1) présente une station de base (6) et une pièce à main (2) filaire ou sans fil, dans lequel le dispositif de commande, le dispositif de détection et le dispositif de signalisation (4) sont disposés dans la pièce à main (2) ou dans la station de base (6).

12. Dispositif de traitement médical (1), en particulier dentaire pour la préparation d'un canal de racine selon l'une des revendications précédentes, **caractérisé en ce que** le dispositif (1) comprend en outre une commande d'entraînement pour commander l'unité d'entraînement sur la base de la charge s'exerçant sur l'instrument (3), de la vitesse de rotation de l'instrument et/ou de la position de l'instrument dans le canal de racine.

13. Procédé pour la signalisation des paramètres de fonctionnement d'un dispositif de traitement médical (1), en particulier dentaire selon la revendication 1, **caractérisé par** les étapes suivantes :
- la détection d'au moins deux valeurs de mesure de deux paramètres de fonctionnement au moyen du dispositif de détection,
- la comparaison des valeurs de mesure détectées avec les valeurs de référence respectives des paramètres de fonctionnement,
- la signalisation au choix du paramètre de fonctionnement au niveau du dispositif de signalisation (4) dont la valeur de mesure a atteint la valeur de référence correspondante du dispositif de commande.

14. Procédé pour la signalisation des paramètres de fonctionnement d'un dispositif de traitement médical (1), en particulier dentaire selon la revendication 13, **caractérisé en ce que**, lors de l'atteinte simultanée de plusieurs valeurs de référence réglées de plusieurs paramètres de fonctionnement, les paramètres sont signalés en alternance ou d'après une priorité pouvant en particulier être sélectionnée par l'utilisateur.
